# EUROPEAN PATENT APPLICATION

(11) **EP 1 388 647 A2**
(43) Date of publication of application: **11.02.2004**
(21) Application number: 03017967.5
(22) Date of filing: 06.08.2003
(51) Int. Cl.: F01N 3/023, F02D 41/02, F02D 41/12

(54) **Engine exhaust gas purification apparatus and method**

(30) Priority: 09.08.2002 JP 2002232791
(71) Applicant: Mazda Motor Corporation, Aki-gun, Hiroshima 730-8670 (JP)
(72) Inventor: Ueoka, Toshitsugu, Aki-gun, Hiroshima 730-8670 (JP); Harada, Kouichiro, Aki-gun, Hiroshima 730-8670 (JP); Takami, Akihide, Aki-gun, Hiroshima 730-8670 (JP); Tsushio, Yoshinori, Aki-gun, Hiroshima 730-8670 (JP); Hayashibara, Hiroshi, Aki-gun, Hiroshima 730-8670 (JP); Saito, Tomoaki, Aki-gun, Hiroshima 730-8670 (JP); Kataoka, Motoshi, Aki-gun, Hiroshima 730-8670 (JP); Shoya, Taizou, Aki-gun, Hiroshima 730-8670 (JP)
(74) Representative: Müller-Boré & Partner Patentanwälte

(57) **Abstract**

In an engine performing a post-injection of fuel for regeneration of a DPF **13** after a main-injection of fuel for securing engine output power, while the post-injection immediately terminates when stoppage of the engine **1** or fuel cut therefor is requested during the regeneration of the DPF, the main-injection does not immediately terminate, but terminates after the execution thereof is continued for a short time. The continued execution of the main-injection for a short time causes post-injection fuel remaining in an exhaust passage **11** to be combusted, thereby preventing the post-injection fuel from being deposited in the DPF **13**.

## Description

The present invention relates to an exhaust gas purification apparatus of a diesel engine, having DPFs (Diesel Particulate Filters) disposed in exhaust passages. Furthermore, the invention relates to an exhaust gas purification method and computer program product.

Regarding a diesel engine including a DPF disposed in an exhaust passage, Japanese Unexamined Patent Application Publication No. 2001-303980 discloses that when the amount of soot collected in a DPF is required to be reduced, the temperature of the DPF is increased and soot is then combusted, thereby regenerating the DPF (collecting the soot). More specifically, a fuel injection valve is controlled to perform a main-injection of fuel at around the pressure-stroke top dead center of a cylinder, and a post-injection of the fuel is performed during the expansion stroke after the main-injection. Thereby, the fuel is fed to the DPF. In this case, the fuel is oxidized and reaction heat occurring in the reaction causes the DPF temperature rise, thereby burning off the soot.

The publication additionally describes that, before the post-injection, exhaust gas flow rate is reduced to cause a temperature rise of exhaust gas. The publication further describes as follows. When the temperature of the DPF is less than the level of a predetermined temperature, the engine increases the exhaust gas temperature by reducing the exhaust gas flow rate. On the other hand, when the temperature of the DPF has reached the level of the predetermined temperature, the fuel is fed by the post-injection.

However, although the post-injection is effective for regenerating the DPF, the fuel in injected in the post-injection reaches the DPF and deposited therein. In this case, when the DPF temperature rises, there is a possibility in that previously deposited fuel is abruptly combusted, thereby occurring cracking to the DPF. In particular, suppose the DPF is used that is a monolithic-honeycomb ceramic filter of a wall flow type in which entries and exits of honeycomb cells are alternately sealed. In this case, the deposited fuel is abruptly combusted, causing abrupt rises in, for example, combustion pressure and temperature, whereby the DPF is rendered prone to cracking.

For the vehicle, a method can be conceived in which a DPF thereof is regenerated during stopping of the vehicle, not during running of the vehicle. More specifically, when the DPF regeneration is necessary, an engine of the vehicle is driven in the vehicle stopping state, and the above-described post-injection is executed when the DPF temperature has become high. Thereby, soot is combusted and removed.

However, when the DPF regeneration is interrupted (when the engine is stopped), the fuel that has been post-injected immediately before the interruption and that exists in the form of fine particulates in exhaust gas may be condensed and deposited in the DPF or an exhaust passage positioned upstream of the DPF. The fuel is condensed because of reductions in exhaust pressure and exhaust gas temperature in an upstream side of the DPF in association with the interruption. In this case, when the engine is restarted and the DPF temperature is increased through the post-injection in order to regenerate the DPF, the amount of fuel deposition in the DPF can exceed an allowable amount, and the deposited fuel combusts abruptly, potentially leading to cracking of the DPF.

Even in the case where the DPF is regenerated through the post-injection in the vehicle running state, when the fuel is cut during deceleration (the post-injection is concurrently terminated), outside air drawn into a combustion chamber of the engine is blown out into the exhaust passage as it is. Consequently, in some cases, the temperature in the exhaust passage rapidly drops, and fuel particulates contained in exhaust gas fed through the post-injection is condensed and deposited in devices such as the DPF. Also in this case, when the vehicle is rerun or the main-injection is resumed and DPF regeneration is subsequently commenced through the post-injection, the amount of fuel deposition in the DPF exceeds an allowable amount, and the deposited fuel combusts abruptly, potentially leading to cracking of the DPF.

When executing idling stop (which causes the engine to stop upon detection of a stop event of the vehicle), since exhaust gas is not fed to the DPF, the exhaust pressure in the upstream side of the DPF is low. In this case, since the drop amount in the DPF temperature increases, condensation of fuel particulates contained in exhaust gas and deposition thereof in the DPF becomes conspicuous.

The temperature such as the DPF temperature or the temperature of a catalyst disposed in an upstream side of the DPF is detected using a sensor. Alternatively, the temperature is detected through estimation in accordance with, for example, the engine operation state. When the detected temperature exceeds a predetermined temperature, the post-injection is commenced for regenerating the DPF. However, the detected temperature can largely be different from an actual temperature depending on the environment where, for example, the atmospheric temperature is low and/or rainwater bounced from a road surface is absorbed into the DPF. In this case, even when the post-injection is executed in accordance with the detected temperature, the post-injection fuel is not combusted through, for example, the catalyst or the DPF, and is hence deposited in devices such as the DPF. When the temperature of the DPF has increased, the deposited fuel can be combusted abruptly, potentially leading to cracking of the DPF.

### SUMMARY OF THE INVENTION

An object of the present invention is to solve the problem of cracking of a DPF (Diesel Particulate Filter) that can occur because of deposition of post-injection fuel of the type described above.

This object is solved according to the invention by an engine exhaust gas purification apparatus according to claim 1, by an engine exhaust gas purification method according to claim 10 and by a computer program product according to claim 17. Preferred embodiments of the invention are subject of the dependent claims.

In order to achieve this object, the present invention is arranged such that even when stoppage of an engine or fuel cut therefor is requested during DPF regeneration through the execution of the post-injection, the execution of the main-injection are continued for a short time to combust fuel fed till that time through the post-injection.

Further, the present invention is arranged such that when the DPF regeneration through the post-injection is interrupted, the execution of the post-injection for resuming the DPF regeneration are regulated.

More specifically, the present invention provides an engine exhaust gas purification apparatus comprising: a fuel injector for feeding fuel to a combustion chamber of a diesel engine; a diesel particulate filter ("DPF"), disposed in an exhaust passage of the diesel engine, for collecting soot in an exhaust gas; collection amount detection means for detecting values regarding the amount of soot collected by the DPF;and injection control means for executing a post-injection so that the fuel injector injects the fuel during the expansion stroke or the exhaust stroke after a main-injection so that the fuel injector injects the fuel at or in the vicinity of a top dead center of the compression stroke in order to decrease soot collected in the DPF when the amount of the collected soot is determined in accordance with detected values of the collection amount detection means to be larger than a predetermined value, wherein when a request for stoppage of the diesel engine or for fuel cut therefor is detected during the execution of the post-injection for decreasing soot, the injection control means immediately terminates the post-injection and terminates the main-injection after a first predetermined time has elapsed from a point of time when the request is detected.

Accordingly, the fuel fed into the exhaust passage through the execution of the post-injection before the stoppage of the diesel engine or fuel cut therefor is combusted in the manner that the execution of the main-injection is continued thereafter for the short time, and high-temperature exhaust gas is discharged from the diesel engine. Thereby, the amount of fuel to be deposited in the DPF or the exhaust passage positioned upstream of the DPF is small. Consequently, the amount of the fuel around the DPF can be prevented from excessively increasing when the regeneration of the DPF is resumed, and the DPF can be prevented from being cracked through abrupt combustion of a large amount of the fuel.

Preferably, the engine exhaust gas purification apparatus further comprises: ignition means, disposed in the exhaust passage positioned upstream of the DPF, for igniting the fuel in the exhaust passage; and ignition control means for controlling the ignition means to operate when the request for stoppage of the diesel engine or for fuel cut therefor is detected.

In this case, the fuel fed into the exhaust passage through the execution of the post-injection before the stoppage of the diesel engine or fuel cut therefor is securely ignition-combusted through operation of the ignition means. Thereby, the amount of the fuel around the DPF can be prevented from excessively increasing when the regeneration of the DPF is resumed, and the DPF can be prevented from being cracked through abrupt combustion of a large amount of the fuel. In addition, since the execution of the main-injection is continued for the short time even after stoppage of the diesel engine or fuel cut therefor is requested, high-temperature exhaust gas is discharged from the diesel engine. Consequently, the ignition means can be prevented from being inoperative.

Preferably, an oxidation catalyst is disposed in the exhaust passage positioned upstream of the DPF.

In this case, the fuel fed into the exhaust passage through the execution of the post-injection before the stoppage of the diesel engine or fuel cut therefor is combusted through catalytic reaction occurring in the oxidation catalyst. Thereby, the amount of the fuel around the DPF can be prevented from excessively increasing when the regeneration of the DPF is resumed. Further, the DPF can be prevented from being cracked through abrupt combustion of a large amount of the fuel. Moreover, since the execution of the main-injection is continued for the short time even after stoppage of the diesel engine or fuel cut therefor is requested, high-temperature exhaust gas is discharged from the diesel engine. Consequently, the activation of the oxidation catalyst for causing the post-injection fuel to be combusted is secured.

Preferably, when the request for stoppage of the diesel engine or for fuel cut therefor is detected during the execution of the post-injection for decreasing soot, and the post-injection and the main-injection are terminated in response to the request, the injection control means place restriction on the post-injection for decreasing soot at the time of resuming the fuel injection.

Accordingly, even when the post-injection fuel remained in the exhaust gas through previous main-injection cessation is deposited in devices such as the DPF and the exhaust passage positioned upstream thereof, and even when the DPF temperature at the time of commencing the post-injection is lower than a pre-estimated temperature, the temperature of the DPF can be raised during the restriction of the execution of the post-injection. Thereby, residual part of the post-injection fuel can be combusted, and even when the post-injection is commenced thereafter, no event occurs in which a large amount of the post-injection fuel is deposited in devices such as the DPF and the exhaust passage positioned upstream thereof. Consequently, the DPF can be prevented from being cracked through abrupt combustion of a large amount of the fuel.

In the case where, as described above, the post-injection for reducing the soot is restricted at the time of resuming the fuel injection, preferably, the restriction of the post-injection is performed so that a quantity of the post-injection of the fuel from a point of time when the fuel injection is resumed until a second predetermined time elapses is smaller than a quantity of the post-injection for decreasing soot after the second predetermined time has elapsed.

Accordingly, at the outset of the case when the main-injection is resumed, the quantity of the post-injection for decreasing soot is reduced to be small. Therefore, a large amount of the post-injection fuel is not deposited in devices such as the DPF and the exhaust passage positioned upstream thereof. Consequently, the DPF can be prevented from being cracked through abrupt combustion of a large amount of the fuel.

In the case where, as described above, the post-injection for reducing the soot is restricted at the time of resuming the fuel injection, preferably, the restriction of the post-injection is performed so that the execution of the post-injection for decreasing soot is ceased while a state where the temperature of the DPF is equal to or more than a predetermined temperature continues for the second predetermined time.

Accordingly, even when the main-injection is resumed and the temperature of the DPF is raised to be equal to or more than a predetermined temperature, the post-injection for decreasing soot is not executed unless otherwise the state where the temperature of the DPF is high continues for the predetermined time or more. Therefore, the post-injection fuel remained through previous the execution of the post-injection is combusted meanwhile. Moreover, an event can be prevented in which the post-injection is executed while the actual temperature of the DPF is low, and the post-injection fuel is hence deposited in devices such as the DPF and the exhaust passage positioned upstream thereof. Consequently, the DPF can be prevented from being cracked through abrupt combustion of a large amount of the fuel.

Preferably, the second predetermined time is set to a value increasing greater as a stoppage continuance time of the diesel engine increases longer.

In this case, the temperature of the DPF can be securely raised to a level at which the DPF can be regenerated. Consequently, a large amount of the post-injection fuel after cancellation of the restriction can be prevented from being deposited in the DPF.

Preferably, the engine exhaust gas purification apparatus further comprises DPF temperature detection means for detecting the temperature of the DPF, wherein the injection control means performs: control of the post-injection to be executed when soot collected in the DPF is requested to decrease, and the temperature of the DPF that has been detected by the DPF temperature detection means exceeds a predetermined value; and restriction of the post-injection when the temperature of the DPF is equal to or less than the predetermined value.

That is, in an arrangement where a determination is made whether the post-injection for decreasing soot can be executed in accordance with a detected value of the DPF temperature, a case can take place in which the detected value of the DPF temperature is lower than an actual DPF temperature depending on the environment at the time of, for example, rainfall. In this case, although the DPF temperature is actually low, since the post-injection fuel is fed, a cause is created to allow the post-injection fuel to be deposited in devices such as the DPF and the exhaust passage positioned upstream thereof, potentially leading to cracking of the DPF.

However, as described above, when the main-injection is terminated after the predetermined time has elapsed from the time when the post-injection for decreasing soot is terminated, the amount of residual part of the post-injection fuel in the exhaust passage is small. As such, even when the post-injection is executed in accordance with an estimated temperature of the DPF, a state in which a large amount of the fuel is deposited in devices such as the DPF and the exhaust passage positioned upstream thereof can be prevented. Consequently, the DPF can be prevented from being cracked. Further, when the post-injection for decreasing soot is restricted at the time of resuming the main-injection, a state in which a large amount of the fuel is deposited in devices such as the DPF and the exhaust passage positioned upstream thereof can be prevented. Consequently, the DPF can be prevented from being cracked.

Preferably, the diesel engine is mounted on a vehicle to drive the vehicle, the engine exhaust gas purification apparatus further comprises stop state detection means for detecting a stop state of the vehicle, and the injection control means controls the main-injection to terminate when the stop state detection means has detected that the vehicle is in the stop state.

More specifically, when idling stop causing the execution of the main-injection to be ceased is executed upon detection of a stop state of the vehicle, high-temperature exhaust gas is caused not to be discharged from the diesel engine. Concurrently, the exhaust pressure of an upstream side of the DPF is decreased, and the temperature of the exhaust passage is decreased.

Even in this case, as described above, when the main-injection is terminated after the predetermined time has elapsed from the time when the post-injection for decreasing soot is terminated, the amount of residual part of the post-injection fuel in the exhaust passage is small. Therefore, a state in which a large amount of the fuel is deposited in devices such as the DPF and the exhaust passage positioned upstream thereof can be prevented. Consequently, the DPF can be prevented from being cracked. Further, the post-injection for decreasing soot is restricted at the time of resuming the main-injection. Thereby, even when the idling stop has caused the fuel to be somewhat deposited in devices such as the DPF and the exhaust passage, the deposition amount thereof can be prevented from increasing. Consequently, the DPF can be prevented from being cracked.

The post-injection timing for decreasing the soot may be set to, for example, a range between equal to or more than 60° CA (Crank Angle) ATDC (after top dead center) and equal to or less than 120° CA (more preferably, a range between equal to or more than 80° CA and equal to or less than 100° CA).

More specifically, the present invention provides an engine exhaust gas purification method for an engine, to be used particularly with an exhaust gas purification system according to the invention or a preferred embodiment thereof, comprising the following steps:
detecting values regarding the amount of soot collected by a diesel particulate filter ("DPF"), disposed in an exhaust passage of the diesel engine, for collecting soot in an exhaust gas; and
executing a post-injection so that a fuel injector for feeding fuel to a combustion chamber of a diesel engine injects the fuel during the expansion stroke or the exhaust stroke after a main-injection so that the fuel injector injects the fuel at or in the vicinity of a top dead center of the compression stroke in order to decrease soot collected in the DPF when the amount of the collected soot is determined in accordance with detected values of the collection amount detection means to be larger than a predetermined value,
wherein when a request for stoppage of the diesel engine or for fuel cut therefor is detected during the execution of the post-injection for decreasing soot, the injection control means immediately terminates the post-injection and terminates the main-injection after a first predetermined time has elapsed from a point of time when the request is detected.

According to a preferred embodiment of the invention, when the request for stoppage of the diesel engine or for fuel cut therefor is detected during the execution of the post-injection for decreasing soot, and the post-injection and the main-injection are terminated in response to the request, a restriction is placed on the post-injection for decreasing soot at the time of resuming the fuel injection.

Preferably, the restriction of the post-injection is performed so that a quantity of the post-injection of the fuel from a point of time when the fuel injection is resumed until a second predetermined time elapses is smaller than a quantity of the post-injection for decreasing soot after the second predetermined time has elapsed.

Further preferably, the restriction of the post-injection is performed so that the execution of the post-injection for decreasing soot is ceased while a state where the temperature of the DPF is equal to or more than a predetermined temperature continues for the second predetermined time.

Still further preferably, the second predetermined time is set to a value increasing greater as a stoppage continuance time of the diesel engine increases longer.

Further preferably, the engine exhaust gas purification method further comprises a step of detecting the temperature of the DPF,
wherein the post-injection is controlled to be executed when soot collected in the DPF is requested to decrease, and the temperature of the DPF that has been detected exceeds a predetermined value; and restriction of the post-injection is performed when the temperature of the DPF is equal to or less than the predetermined value.

Most preferably, the main-injection is controlled to terminate when it has been detected that the vehicle is in a stop state.

More specifically, the present invention provides a computer program product for an engine exhaust gas purification for an engine comprising computer-readable instructions which, when loaded and run on a suitable computer performs an engine exhaust gas purification method according to the invention or a preferred embodiment thereof.

### BRIEF DESCRIPTION OF THE DRAWINGS

Fig. **1** is an overall configuration view of a diesel-engine exhaust gas purification apparatus of an embodiment according to the present invention.
Fig. **2** is a flowchart of a fuel injection control example 1 according to the embodiment.
Fig. **3** is a time chart of the control example 1.
Fig. **4** is a flowchart of a fuel injection control example 2 according to the embodiment.
Fig. **5** is a time chart of the control example 2.
Fig. **6** is a flowchart of a fuel injection control example 3 according to the embodiment.
Fig. **7** is a time chart of the fuel injection and a heat generation rate according to the control example 3.
Fig. **8** is a time chart of the control example 3.
Fig. **9** is a graph showing the relationship between a post-injection timing and a soot discharge amount according to the fuel injection control example 3.
Fig. **10** is a graph showing the relationship between the post-injection timing and the exhaust gas temperature according to the control example 3.
Fig. **11** is a graph showing the relationship between the post-injection timing and an HC discharge amount according to the control example 3.
Fig. **12** is a flowchart of a fuel injection control example 4 according to the embodiment.
Fig. **13** is a time chart of the control example 4.
Fig. **14** is a flowchart of the fuel injection control example 5 according to the embodiment.

### DETAILED DESCRIPTION OF THE INVENTION

Hereinafter, description will be given of a preferred embodiment of the present invention with reference to the drawings.

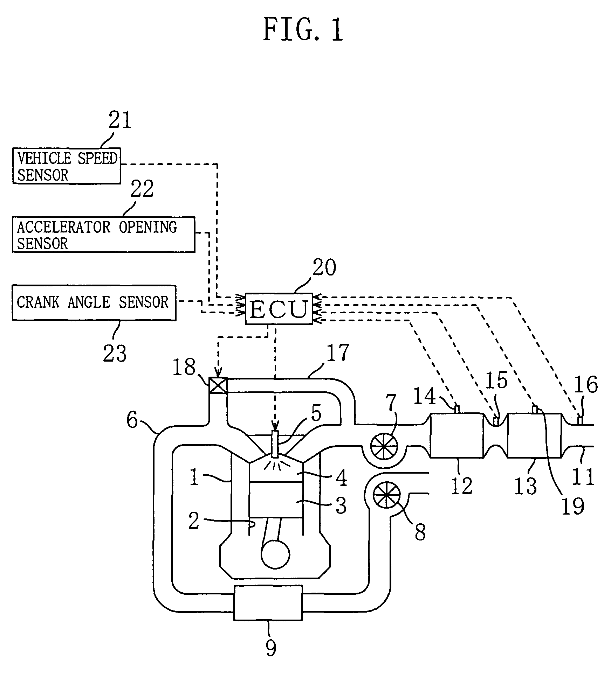

Fig. **1** shows an example of an engine exhaust gas purification apparatus according to the embodiment of the present invention, in which numeral **1** denotes a diesel engine equipped with a vehicle. The diesel engine **1** includes a plurality of cylinders **2**, **2**, ... (only one of which is shown). A piston **3** is inserted into each cylinder **2** to be reciprocatable, in which the piston **3** and a cylinder head partitively form a combustion chamber **4** in the cylinder **2**. An injector **5** (fuel injection valve) is disposed in a ceiling portion of the combustion chamber **4**, in which high pressure fuel is directly injected from a nozzle hole formed at an end portion of the injector **5** to the combustion chamber **4**.

An air intake passage **6** for supplying air (refreshed air) is connected to the combustion chamber **4** of each cylinder **2**. A blower **8** and an inter-cooler **9** are provided in the air intake passage **6**. The blower **8** is driven by a turbine **7** described below to compress intake gas compressed by the blower **8** and supplies the gas into the combustion chamber **4**. The inter-cooler 9 cools the intake gas compressed by the blower **8**.

In addition, the combustion chamber **4** of the cylinder **2** is connected to an exhaust passage **11** that emits combustion gas (exhaust gas). In the exhaust passage **11**, there are disposed the turbine **7**, which is rotated by exhaust gas flow, an oxidation catalyst **12**, and a diesel particulate filter **13** ("DPF") in the order from the upstream to downstream sides. The turbine **7** and the blower **8** together form a turbocharger.

The oxidation catalyst **12** acts for the oxidation of HC (non-combusted fuel component) and CO in the exhaust gas. The oxidation catalyst **12** is formed by coating noble metal based catalyst (for example, Pt and Pd are supported to ã-alumina) on a honeycombed cordierite carrier, in which all cells of the carrier have two ends that are kept open. The DPF **13** is of a cordierite honeycombed wall flow type in which end surfaces of the respective cells constituting the filter are alternately sealed. In addition, oxidation catalyst is coated on the DPF **13**. It is noted that the carrier of the oxidation catalyst **12** and the DPF **13**, for example, may be formed using a silica or inorganic porous material instead of the cordierite material.

A temperature sensor **14** is provided to the oxidation catalyst **12** to detect the temperature thereof. Further, exhaust pressure sensors **15** and **16** are provided on the upstream and downstream sides of the DPF **13**. In addition, a temperature sensor **19** is provided to the DPF **13** to detect the temperature thereof. Further provided in the vehicle are a vehicle speed sensor **21** (vehicle-stop-state detection means) for detecting the vehicle speed, an accelerator opening sensor **22** for detecting a depression amount of an accelerator pedal of the engine, and a crank angle sensor **23** for detecting the engine speed, and so on.

An upstream end of an exhaust gas recirculation passage **17** (hereinafter, referred to as an "EGR passage") is connected to a portion of the exhaust passage **11**, the portion being positioned further upstream from the turbine **7**. A downstream end of the EGR passage **17** is connected to the air intake passage **6**, which is positioned downstream of the inter-cooler **9**. In this configuration, exhaust gas is partly returned to the air intake passage **6**. In addition, an exhaust gas recirculation amount adjusting valve **18** (hereinafter, referred to as an "EGR valve") is provided in the EGR passage **17**.

The injector **5** and the EGR valve **18** operate in response to a control signal transmitted from an electronic control unit **20** (hereinafter, referred to as an "ECU"). The ECU **20** receives output signals outputted from various devices, such as the exhaust pressure sensors **15** and **16**, the vehicle speed sensor **21**, accelerator opening sensor **22**, the crank angle sensor **23**, an engine water temperature sensor for detecting the cooling water temperature of the engine, an intake pressure sensor for detecting the pressure state of intake air, an airflow sensor for detecting an engine intake air amount.

### (Fuel Injection Control)

### Control Example 1

A control example 1 is implemented in a case where the DPF **13** is regenerated during stopping of the vehicle, not during running of the vehicle. The DPF regeneration during stopping the vehicle is executed in a manner that in a clutch-disengaged state, the engine operation mode is shifted from a vehicle running mode for running the vehicle to a DPF regeneration mode over a mode-shifting switch provided near a driver's seat of the vehicle.

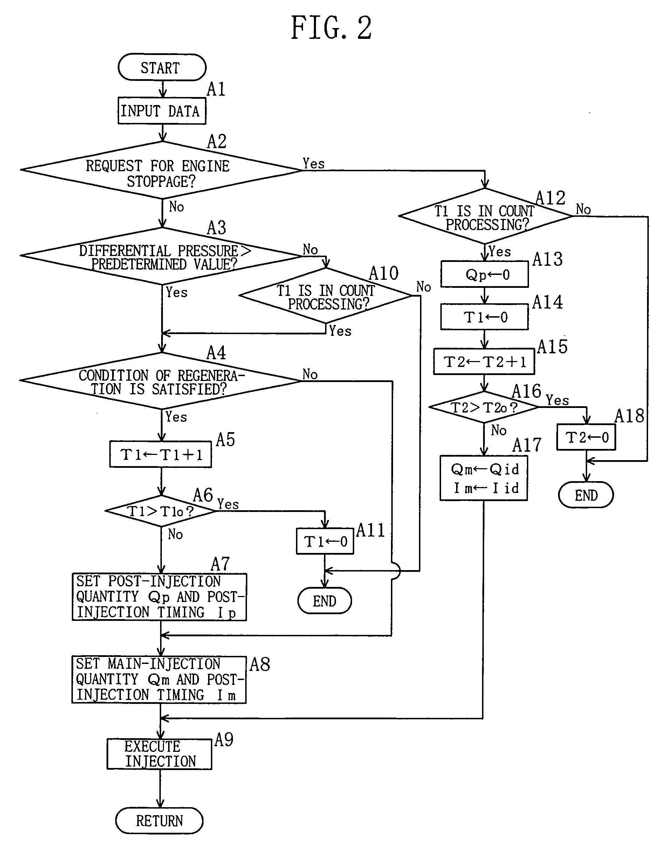

A procedure of operation of fuel injection control (control for the injector 5) by the ECU **20** will be described hereinafter with reference to a flowchart shown in Fig. 2. The engine is started for DPF regeneration during stopping the vehicle. After the start, in step **A1**, signals or the like are respectively inputted from the exhaust pressure sensors **15** and **16**, the vehicle speed sensor **21**, the accelerator opening sensor **22**, the crank angle sensor **23**, and the engine water temperature sensor, etc (data input).

Subsequently, in step **A2**, when the operation has not detected an engine stoppage request, specifically, a shift from the DPF regeneration mode to the vehicle-running mode (the engine operation is once stopped when shifted), the process proceeds to step **A3**. In step **A3**, it is determined whether the difference between an exhaust gas pressure in an upstream side of the DPF **13** and an exhaust gas pressure in a downstream side of the DPF **13** exceeds a predetermined value. This differential pressure higher than the predetermined value indicates that the wall flow of the exhaust gas is deteriorated. In other words, it indicates that as the deterioration degree of the exhaust gas flow increases, the amount of soot collected in the DPF **13** is increased greater. Therefore, the soot needs to be combusted and removed.

When the differential pressure is higher than the predetermined value in step **A3**, the process proceeds to step **A4** and it is determined whether a condition of regeneration of the DPF **13** is satisfied. Specifically, it is determined that the condition of regeneration is satisfied when the temperature of oxidation catalyst **12** or the temperature of the DPF **13** exceeds a predetermined value. More specifically, the DPF **13** is regenerated in the manner that the post-injection fuel is fed to the exhaust passage **11**, the fuel is then combusted, and heat generated in the combustion is used to raise the DPF temperature. Therefore, the temperature of the oxidation catalyst **12** needs to be a level sufficient to enable a subsequent post-injection fuel to be combusted. Alternatively, when the oxidation catalyst **12** is not provided, the temperature of the DPF **13** needs to be high sufficient to enable the post-injection fuel to be combusted for combusting soot.

The oxidation catalyst temperature sensor **14** detects the temperature of the oxidation catalyst **12**, and the DPF temperature sensor **19** detects the temperature of the DPF **13**. The oxidation catalyst temperature sensor **14** may be, for example, a device for measuring the temperature of the oxidation catalyst **12** itself (temperature of a housing). Still alternatively, the sensor **14** may be a device for measuring the exhaust gas temperature at an entry of the catalyst or a device for measuring the exhaust gas temperature at an exit of the catalyst. The DPF temperature sensor **19** may be, for example, a device for measuring the temperature of the DPF **13** itself. Still alternatively, the sensor **19** may be a device for measuring the exhaust gas temperature at an entry of the DPF or a device for measuring the exhaust gas temperature at an exit of the DPF. Still alternatively, the temperatures of, for example, the oxidation catalyst **12** and the DPF **13** may be detected through estimation in accordance with an engine operation condition history.

In step **A4**, when the condition of regeneration is determined to be satisfied, the process proceeds to step **A5** and a first timer **T1** is activated to increment the count thereof. Subsequently, in step **A6**, when the first timer **T1** is determined not to exceed a predetermined value **T1o** the process proceeds to step **A7** to set a post-injection quantity **QP** and a post-injection timing **Ip** of fuel. The predetermined value **T1o** in this case is set to, for example, about 10 minutes. The post-injection is performed so that non-combusted HC (fuel) is fed to the oxidation catalyst **12** for oxidation thereof to obtain the heat of reaction for combusting soot in the DPF **13**. Concurrently, the post-injection is performed so that the fuel reaches the DPF **13** through the oxidation catalyst **12** to be combusted for removing soot. For this reason, the post-injection timing **Ip** is set to 60 to 120° CA (Crank Angle) (preferably, 80 to 100° CA) after a top dead center (ATDC) of a compression stroke so that post-injection fuel is not combusted in the combustion chamber.

Subsequently, in step **A8**, a main-injection quantity **Qm** and a main-injection timing **Im** of fuel are set. The main-injection in this case is performed so that the combustion heat in the engine is fed to the exhaust passage **11** to raise the temperatures of the oxidation catalyst **12** and the DPF **13**. In specific, the main-injection quantity **Qm** is set to a value causing the engine speed ranging to be in a range about 1500 to 2500 rpm in a state where an intake amount air is cut down. The main-injection timing **Im** is set to a point at or in the vicinity of a top dead center of the compression stroke. Subsequently, in step **A9**, the main-injection and the post-injection are executed.

The post-injection is not subsequently performed when the post-injection after four main-injections have been executed in series. That is, the post-injections are intermittently executed with one unexecution every four series executions. Of course, the arrangement may be made such that the post-injection is always executed after the main-injection; that is, the post-injection is executed at all times with respect to the cylinder.

In step **A3**, when the differential pressure between the pressures in the upstream side and downstream side of the DPF **13** is determined to be equal to or less than the predetermined value, the process proceeds to step **A10**, where it is determined whether **T1** is in count processing. In step **A10**, when **T1** is in count processing, the process proceeds to step **A4** and it is determined whether the condition of regeneration is satisfied; whereas when **T1** is not in count processing, the regeneration of the DPF **13** terminates. In step **A4**, when the condition of regeneration is not satisfied, only a main-injection is executed (steps **A8** ? **A9**). When **T1** is determined to exceed the predetermined value **T1o** in step **A6**, the process proceeds to step **A11**, where **T1** is returned to zero. Then, the regeneration of the DPF **13** terminates.

Subsequently, in step **A2**, when an engine stoppage request is detected, the process proceeds to step **A13**, where the it is determined whether **T1** is in count processing. When **T1** is in count processing, the process proceeds to step **A14** and sets the post-injection quantity **Qp** to zero. Then, at a subsequent step **A15**, **T1** is returned to zero; and a second timer **T2** is activated to increment the count thereof in subsequent step **A16**.

Subsequently, in subsequent step **A17**, it is determined whether the second timer **T2** exceeds a predetermined value **T2o**. When **T2** is determined not to exceed **T2o**, the process proceeds to step **A18.** In step **A18**, the main-injection quantity **Qm** is set to an injection quantity **Qid** that is approximately the same as in the idling mode, and also the main-injection timing **Im** is set to an injection timing **Iid** at the idling mode. The second timer **T2** is set to allow the execution of the main-injection to be continued for a predetermined short time even after the execution of the post-injection has been terminated in response to an engine stoppage request. Specifically, the predetermined value **T2o** is set to allow two or three combustion cycles with the execution of the main-injection to be continued during the given period of time.

In step **A17**, when the second timer **T2** is determined to exceed the predetermined value **T2o**, the process proceeds to step **A19** and the second timer **T2** is returned to zero. Thereafter, the regeneration of the DPF **13** terminates. The regeneration of the DPF **13** is also: terminated when the first timer **T1** is determined in step **A13** not to be in count processing.

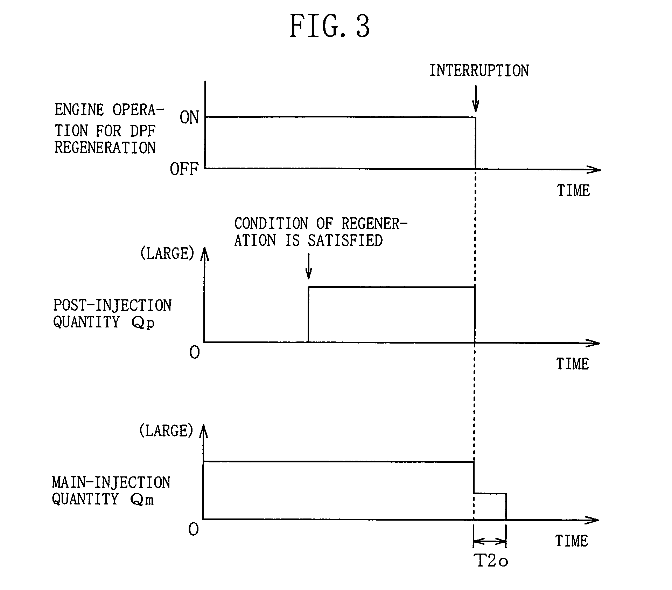

Accordingly, as shown in Fig. **3**, the post-injection is executed when the engine is operated to regenerate the DPF **13** and the condition of regeneration is satisfied. Then, when a command for stopping the engine operation is issued (when the operation mode is shifted from the DPF regeneration mode to the vehicle running mode), the post-injection is immediately terminated. In this case, however, the execution of the main-injection is continued for a predetermined short time, and the execution thereof is terminated upon expiration of the given time.

Accordingly, exhaust gas of high temperature is discharged from the engine even after the execution of the post-injection has terminated, whereby devices such as the oxidation catalyst **12** and the DPF **13** are respectively maintained in high-temperature states. Therefore, post-injection fuel in the exhaust passage **11** is combusted in the oxidation catalyst **12** and the DPF **13**, whereby almost no events occur in which the fuel remaining non-combusted is deposited as it is in devices such as the oxidation catalyst **12** and the DPF **13**. Accordingly, no events occur in which the amount of non-combusted fuel around the DPF **13** excessively increases even when the engine operation is resumed, the condition of regeneration of the DPF **13** is satisfied, and the post-injection is resumed. This enables the prevention of a case where a large amount of the fuel is combusted abruptly, which leads to damage of the DPF **13**.

In addition, as in the embodiment described above, with the oxidation catalyst **12** being provided upstream of DPF **13**, NO in the exhaust gas is oxidized to be NO₂ in the oxidation catalyst **12**, and soot collected in the DPF **13** can be combusted with NO₂. Since combustion of soot with NO₂ occurs at a temperature ranging from 250 to 300°C, the amount of soot deposited in the DPF **13** is less than that in the case where the oxidation catalyst **12** is not provided. Hence, the post-injection need not be frequently executed to implement the DPF regeneration (The expressions "DPF regeneration" and variations thereof refer to reduction of soot collected in the DPF **13**. This applies to the description given hereinafter). This is advantageous to improve fuel economy. Further, after the temperature of the DPF **13** has been raised by heat of the reaction generated in the oxidation catalyst **12**, the regeneration of the DPF **13** can be implemented without largely increasing the quantity of the post-injection quantity. This also works as an advantage in improving the fuel economy.

As described above, the control example 1 is implemented in the case where the DPF **13** is regenerated by shifting the engine operation mode to the DPF regeneration mode during stopping the vehicle. However, also in the case where the DPF **13** is regenerated during running the vehicle, when the condition of regeneration is satisfied, control similar to the above can be implemented. That is, fuel injection control similar to the control example 1 can be implemented when the DPF **13** is continuously regenerated even after the engine operation mode has been shifted to the idling mode.

In more specific, when an engine stoppage request is received during the regeneration of the DPF **13** in the idling mode, while the post-injection is immediately terminated, the execution of the main-injection is continued for the predetermined short time (**T2o**, as described above), and the engine is stopped after the predetermined time has elapsed. However, when no engine stoppage request is received, in the case where the first timer **T1** exceeds **T1o, T1** is returned to zero (steps **A6** ? **A11**). Then, the post-injection quantity **Qp** is set to zero and the process proceeds to step **A8**, where a main-injection is executed.

### Control Example 2

A control example 2 is implemented in a case where a deceleration fuel cut is executed in the regeneration of the DPF **13** during running of the vehicle.

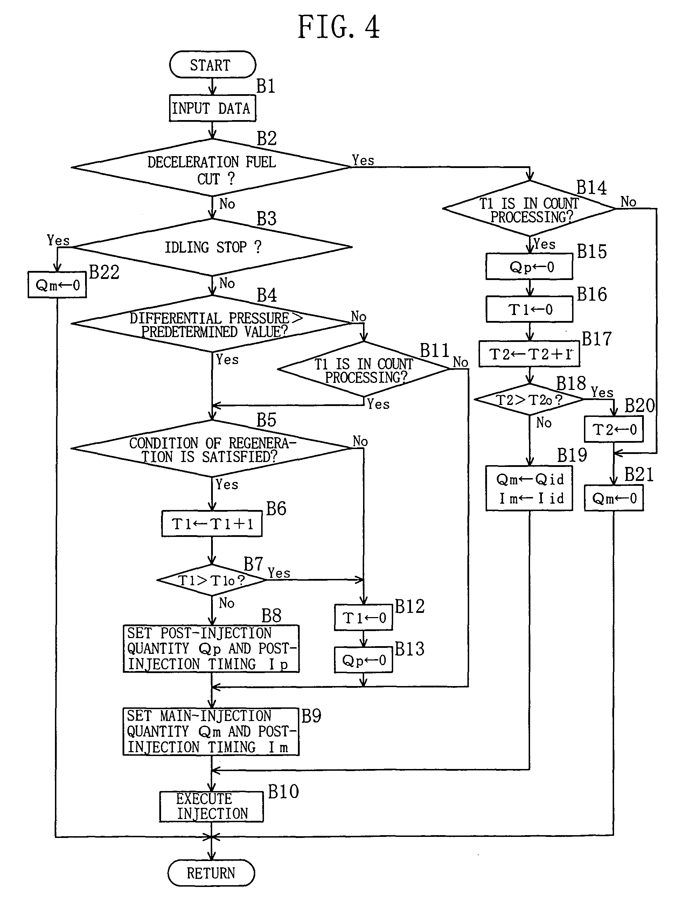

A procedure of operation of fuel injection control by the ECU **20** will be described hereinafter with reference to a flowchart shown in Fig. **4**. Similar to the procedure of the control example 1, after the start, data is inputted in step **B1**. Then, in step **B2**, it is determined whether deceleration fuel cut is requested for the current engine operation mode. Deceleration fuel cut is now assumed to be requested when the engine speed is equal to or more than a fuel-cut set engine speed (for example, 2000 rpm) and when the degree of the accelerator opening is zero. Also assumed now is that the request for the deceleration fuel cut is cancelled when the engine speed becomes a fuel-resupply engine speed (for example, a speed close to an idle engine speed) in a fuel cut mode or when an accelerator-pedal depression is detected.

In step **B2**, when deceleration fuel cut is not requested, the process proceeds to step **B3** and it is determined whether idling stop is requested. The idling stop is determined to have been requested when the vehicle speed is zero and the degree of the accelerator opening is zero. When the idling stop is not requested, processes of steps **B4** to **B13** are executed. The processes are substantially the same as those of steps **A3** to **A11** (that is, the processes are partly different from each other).

In specific, when the differential pressure between pressures in the upstream and downstream sides of the DPF **13** is equal to or more than a predetermined value, and a condition of regeneration of the DPF **13** is satisfied, the first timer **T1** is activated, and the execution of the post-injection (for DPF regeneration) after the execution of the main-injection is continued until **T1** reaches **T1** (steps **B4** to **B10**). In this case, the main-injection quantity **Qm** and the main-injection timing **Im** are set corresponding to a requested engine operation mode (requested output power). When the first timer **T1** exceeds **T1o**, the **T1** is returned to zero, the post-injection quantity **Qp** is set to zero, and the process proceeds to step **B9**, where the execution of the main-injection is continued (steps **B7**? **B12** ? **B13** ? **B9** ? **B10**). In step **B11** when the first timer **T1** is not in count processing, the process proceeds to step **B9** to execute normal main-injection with which the post-injection is not executed.

On the other hand, in step **B2**, when deceleration fuel cut is requested, processes of steps **B14** to **B21** are executed. The processes are substantially the same as those of steps **A13** to **A19** (that is, these processes are partly different from each other) in the control example 1.

That is, when deceleration fuel cut is requested, if the first timer **T1** is in count processing, the post-injection quantity **Qp** is set to zero to terminate the execution of the post-injection, the first timer **T1** is returned to zero, the second timer **T2** is activated, and the execution of the main-injection is continued until **T2** reaches **T2o** (steps **B14** to **B19**).

In step **B18**, when the second timer **T2** exceeds **T2o**, the process proceeds to step **B20**, where **T2** is returned to zero. Then, in subsequent step **B21**, the main-injection quantity **Qm** is set to zero, that is, fuel cut is executed, and the operation then returns. On the other hand, in step **B14**, when the first timer **T1** is not in count processing, the process proceeds to step **B21**, where fuel cut is executed. In step **B3**, when it is determined the idling stop is requested, the process proceeds to step **B22**, where the main-injection quantity **Qm** is set to zero. Thereafter, the process returns.

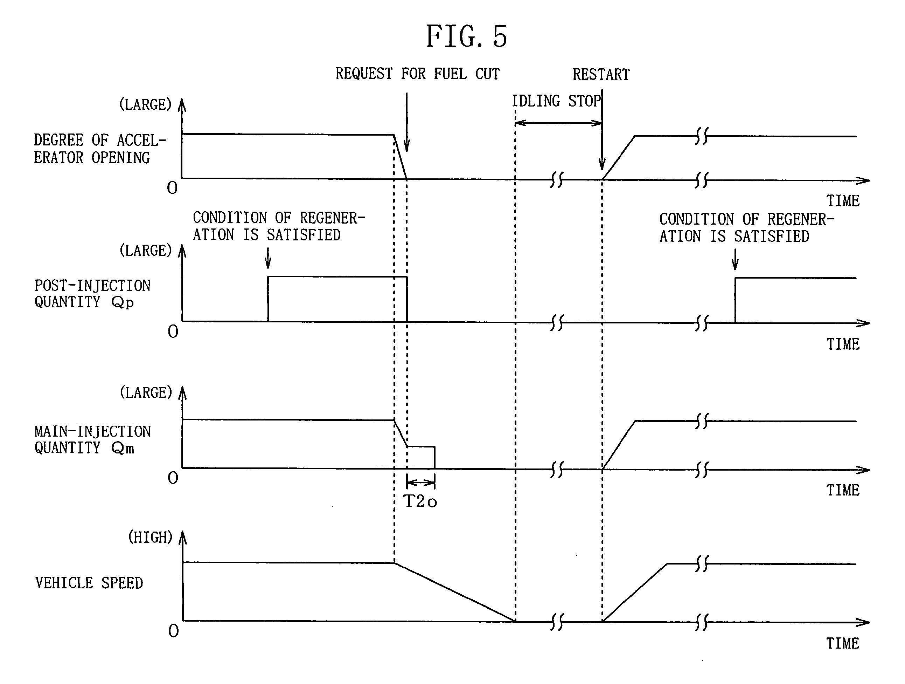

Accordingly, as is shown in Fig. **5**, in a normal running mode in which the main-injection is performed, when the condition of regeneration of the DPF **13** is satisfied, the post-injection is executed. When the depressed accelerator pedal is started to return, the main-injection quantity **Qm** decreases, and the vehicle speed begins to decrease. When the degree of the accelerator opening becomes zero (at which deceleration fuel cut is requested), while the post-injection is immediately terminated, the execution of the main-injection is terminated after being continued for the predetermined short period (**T2o**) even after the termination of the post-injection.

Ordinarily, when the engine speed decreases to a fuel-resupply engine speed in association with a decrease in vehicle speed, the main-injection is resumed to cause the engine speed to be the idle engine speed. Fig. **5** shows a case where downshift is executed before the engine speed decreases to the fuel-resupply engine speed, the engine speed is thereby increased, and the vehicle stops and enters the idling stop mode without experiencing idling. Thereafter, upon depression of the accelerator pedal, a starting motor drives the engine to restart, the vehicle starts to run, and the main-injection is commenced. When the condition of regeneration of the DPF **13** is satisfied, the post-injection is then commenced for soot removal.

As described above, in response to the deceleration fuel cut request, the execution of the main-injection continues for the short time even after the post-injection has terminated, and high-temperature exhaust gas is discharged from the engine. This maintains devices such as the oxidation catalyst **12** and the DPF **13** in high temperature states. Therefore, residual part of the post-injection fuel in the exhaust passage **11** is combusted in the oxidation catalyst **12** and the DPF **13**. Accordingly, almost no events occur in which non-combusted post-injection fuel is deposited as it is in devices such as the oxidation catalyst **12** and the DPF **13** even in the case where the engine is in the idling stoppage mode and the pressure in the upstream side of the DPF **13** decreases. Consequently, the amount of non-combusted fuel around the DPF **13** does not excessively increases even when the engine operation is restarted, the condition of regeneration of the DPF **13** is satisfied, the post-injection is resumed. This enables the prevention of a case where a large amount of the fuel is combusted abruptly, potentially leading to damage of the DPF **13**.

### Control Example 3

A control example 3 relates to the control of the post-injection to implement DPF regeneration in a case where the engine operation for the vehicle running is interrupted and resumed. The control is the same as in a case where the engine operation for the DPF regeneration is interrupted and resumed during stopping the vehicle.

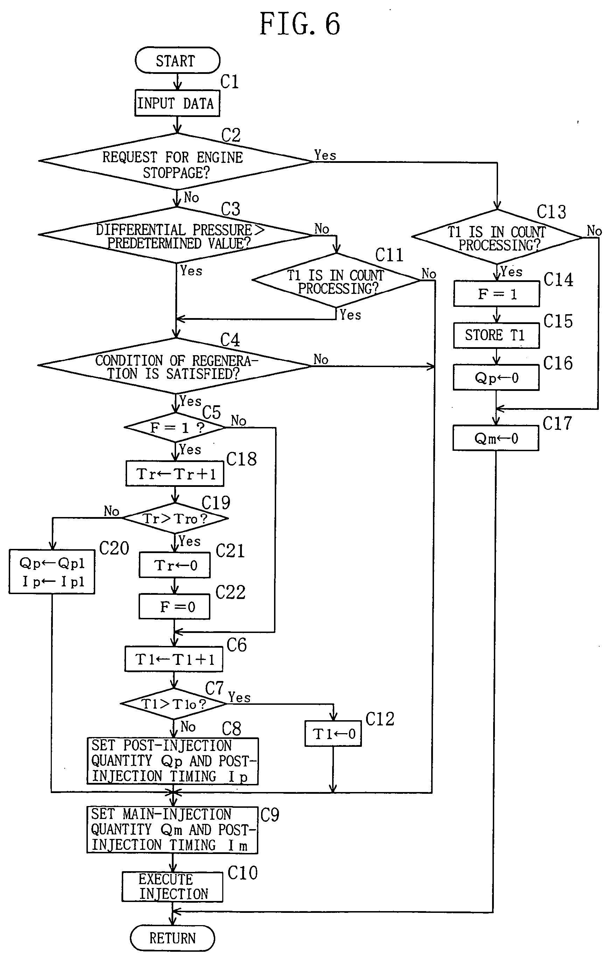

A procedure of fuel injection control by the ECU **20** will be described hereinafter with reference to a flowchart shown in Fig. **6**. Similar to the procedure of the fuel injection control example 1, data is inputted in step **C1** after the start. Then, in step **C2**, it is determined whether engine stoppage is requested. When engine stoppage is not requested, the process proceeds to step **C3** and it is determined whether the difference between exhaust gas pressures in the upstream and downstream sides of the DPF **13** exceeds a predetermined value.

In step **C3**, when the differential pressure is higher than the predetermined value, the process proceeds to step **C4**, where it is determined whether a condition of regeneration of the DPF **13** is satisfied. When the condition of regeneration is determined to be satisfied, the process proceeds to step **C5** to check the value of a flag **F**. The flag **F** is set to "1" when the DPF **13** is regenerated during engine stoppage, i.e., when the engine is stopped during the generation of the DPF **13**.

In step **C5**, when the flag **F** is not "1", the process proceeds to step **C6**, where the first timer **T1** is activated to increment the value thereof. In subsequent step **C7**, when **T1** does not exceed the predetermined value **T1o** the process proceeds to step **C8**, where the post-injection quantity **Qp** and the post-injection timing **Ip** for fuel are set to implement DPF regeneration. In subsequent step **C9**, the main-injection volume **Qm** and the main-injection timing **Im** for fuel are set corresponding to the requested engine operation state. Subsequently, in step **C10**, the main-injection and the post-injection are executed. In step **C7**, when the first timer **T1** exceeds **T1o**, the process proceeds to step **C12** and the first timer **T1** is returned to zero. Then, the process proceeds to step **C9**.

In step **C3**, when the differential pressure between the pressures in the upstream and downstream sides of the DPF **13** is equal to or less than the predetermined value, the process proceeds to step **C11** and it is determined whether **T1** is in count processing. When **T1** is in count processing, the process proceeds to the step **C4** and it is determined whether the condition of regeneration is satisfied. When the first timer **T1** is not in count processing, main-injection control is performed (steps **C11** ? **C9**). In step **C4**, when the condition of regeneration is not satisfied, the process proceeds to step **C9**.

Subsequently, when engine stoppage is requested in step **C2**, the process proceeds to step **C13** and it is determined whether **T1** is in count processing. When **T1** is in count processing, the process proceeds to step **C14**, where the flag **F** is set to "1". Then, the value of the first time **T1** in count processing is stored in subsequent step **C15**, the post-injection quantity **Qp** is set to zero (interruption of the DPF regeneration) in subsequent step **C16**. Thereafter, the main-injection quantity **Qm** is set to zero and the process returns in subsequent step **C17** (engine stoppage). In step **C13,** when the first timer **T1** is not in count processing, the process proceeds to step **C17** (engine stoppage).

In step C5, Setting of the flag F as "(F = 1)" represents an event where the engine is stopped and restarted during the regeneration of the DPF **13**, and the condition of regeneration of the DPF 13 is satisfied thereafter. In this case, the process proceeds to step **C18**, where a regulation timer **Tr** is activated to increment the value thereof. In subsequent step **C19**, when the regulation timer **Tr** does not reach a predetermined value **Tro**, the process proceeds to step **C20**, where **Qp1** is set as the post-injection quantity **Qp**, and **Ip1** is set as the post-injection timing Ip.

The predetermined value Tro represents a time for restricting the execution of the post-injection for the DPF regeneration, during which time (**Tro**) the post-injection is executed according to **Qp1** and **Ip1** for stabilizing or raising the DPF temperature. Although the predetermined value **Tro** may be a fixed value, but it may be set in accordance with a stoppage time, that is, a time (period) during which the regeneration of the DPF **13** is interrupted and the engine is stopped. Alternatively, Tro may be set in accordance with a history of engine operation conditions or modes (or an elapsed time from a time point when the engine operation is restarted to a time point when the condition of regeneration is satisfied) after restarting the engine operation. Still alternatively, **Tro** may be set in accordance with the stoppage time and the operation history (or the elapsed time).

That is, even when a determination is made that the condition of regeneration of the DPF **13** is satisfied, since the determination is made in accordance with detected temperature of the oxidation catalyst **12** or the DPF **13**, a difference may have occurred from an actual temperature. For this reason, the predetermined value **Tro** is preferably set to be greater as the engine stoppage time increases to be longer. In addition, for example, when the condition of regeneration is satisfied in a short time of continuation of a high-speed/high-load engine operation mode, the temperature of the DPF **13** tends to rise. Therefore, the predetermined value **Tro** in this case can decrease to be smaller than that in a case where the condition of regeneration is satisfied in relatively a long time of continuation of a low-speed/low-load engine operation mode.

The post-injection according to the post-injection quantity **Qp1** and the post-injection timing **Ip1** is performed to raise the exhaust gas temperature while decreasing the soot discharge amount and HC discharge amount from the engine, thereby stabilizing or increasing the temperature of the DPF **13**. In this case, the post-injection quantity **Qp1** is set smaller than the post-injection quantity **Qp** of step **C8**. In addition, the post-injection timing **Ip1** is set to be advanced more than the post-injection timing **Ip** of step **A8** so that combustion of the fuel injected by the post-injection commences at about a point of time when a heat generation rate in main-combustion (combustion of the main-injection fuel) becomes substantially zero (in a period of time from a time point of 5 degrees before a crank angle at which a heat generation rate of the main-injection becomes substantially zero to a time point of 10 degrees after the crank angle).

In step **C19**, when the regulation timer **Tr** is determined to exceed the predetermined value **Tro**, the process proceeds to step **C21** and the **Tr** is returned to zero. Subsequently, the process proceeds to step **C22**, the flag **F** is set to "0", and then the process proceeds to step **C6**. In this case, counting of the first timer **T1** is resumed from the value **T1** stored in step **C15**.

The point of time when the heat generation rate in the main-combustion has become substantially zero is variable depending on, for example, the main-injection commence time, the main-injection quantity, the mode of injection (whether the fuel is collectively injected or split-injected), and the last injection timing in split injection. In addition, even when the first post-injection is executed, ignition does not occur instantaneously, but occurs with a delay. Further, a drive delay takes place for a time before the injector **5** actually opens after a drive signal therefor has been outputted.

Therefore, the post-injection timing is determined in such a manner as described. Experiments are conducted to preliminarily obtain points of time when the heat generation rate in the main-combustion has become substantially zero in individual engine operation modes and, in addition thereto, the ignition delay and the drive delay are taken into account. Then, post-injection timings are each determined so that combustion of the post-injection fuel commences when the heat generation rate has become a equal to or less than a predetermined value, or at the point of time when the heat generation rate has become substantially zero, or within a predetermined period of time close to the point of time. Data of the timings thus determined may be mapped and electronically stored corresponding to the engine operation modes, whereby the injection timing can be set corresponding to the engine operation mode in accordance with the mapped data.

The point of time when the heat generation rate in the main-combustion becomes substantially zero can be obtained in the following manner. Intra-cylinder pressure data in units of each crank angle in each of the engine operation modes is obtained by conducting experiments, the heat generation rate is thermodynamically calculated in accordance with the pressure data, and the result is represented in the form of a graph.

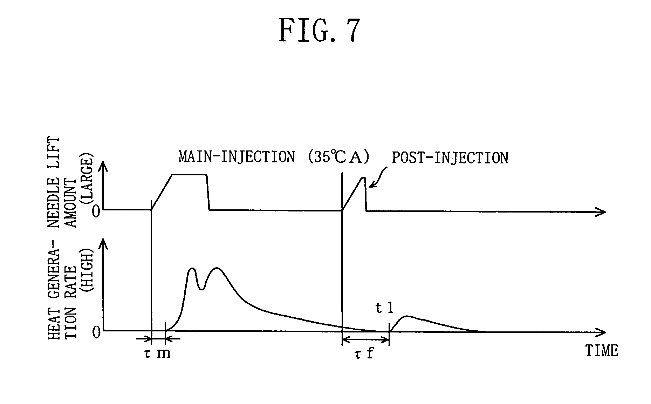

The heat generation rate thus obtained is illustrated in Fig. **7**. As shown in the figure, after commencing the main-injection of the fuel, ignition combustion is commenced with an ignition delay time τ**m** being elapsed and, after the heat generation rate indicates a large value in a positive direction, the heat generation rate becomes zero (0) in accordance with the completion of the diffusion combustion. As such, the post-injection timing is obtained on the basis of a point of time **t1** (time point) when the rate of heat generation becomes approximately zero. Shown in Fig. **7** is in an intermediate-speed/intermediate-load operation mode of the engine (engine speed **Ne**: 2000 rpm, mean effective pressure **Pe**: 0.57 Mpa).

An ignition delay **ôf** of the post-injection fuel is variable depending on, for example, the engine displacement and fuel injection pressure. However, in an engine in a class with a displacement of 1 to 3L, the ignition delay **ôf** is ranged from 0.4 to 0.7 ms when the fuel injection pressure is ranged from 50 to 200 Mpa.

According to experiments, in the intermediate-speed/intermediate-load operation mode, when the post-injection timing was at a 35°CA (crank angle) ATDC, the post-injection fuel was ignition-combusted at the point of time when the heat generation rate in the main-combustion became approximately zero. The ignition delay **ôf** of the post-injection fuel is about 0.5 ms.

The configuration may be arranged to include combustion-state determining means that determines the state of the above-described diffusive combustion in accordance to a signal, such as a detection signal of a temperature sensor for detecting the temperature in the combustion chamber **4**, a detection signal of a combustion light sensor, or a detection signal of a sensor that detects the quantities of, for example, hydrogen and hydrocarbon existing in the combustion chamber **4** and having biased electric charges and high reactivity. In the combustion-state determining means, a determination is made whether, for example, after a main-injection, the temperature is lower than a predetermined temperature, combustion light is not emitted, or the quantities of hydrogen, hydrocarbon, and the like are abruptly decreased. Thereby, a point of time when the heat generation rate in the main-combustion has become substantially zero is obtained, and the post-injection timing for a subsequent combustion cycle is set in accordance with the obtained point of time. Further, the arrangement may be made such that a differential value of a value obtained by subtracting an adiabatic expansion temperature from an intra-cylinder temperature detected by a temperature sensor is found and a point of time when the differential value becomes zero from a minus value is detected, thereby determining a point of time when the heat generation rate in the diffusion combustion becomes zero.

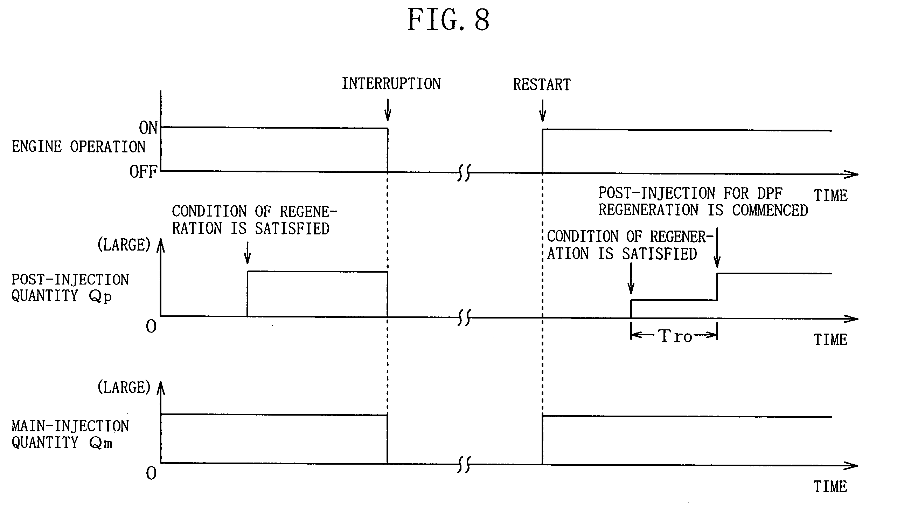

Accordingly, as shown in Fig. **8**, in the state where the main-injection is performed, the post-injection for the DPF regeneration is performed when the condition of regeneration is satisfied. Upon receipt of an engine stoppage request, the execution of the post-injection for the DPF regeneration is interrupted, and the main-injection terminates as well. The oxidation catalyst **12** and the DPF **13** are cooled, there can occur a case in which residual part of the post-injection fuel contained in exhaust gas is condensed and deposited therein.

In the case where the problem of clogging the DPF **13** is held pending resolution, when the engine operation is restarted, the condition of regeneration of the DPF **13** is satisfied since the exhaust gas heats the DPF **13**. In the period of time **Tro**, however, the execution of the post-injection for the DPF regeneration is restricted and the post-injection for raising the exhaust gas temperature (hereinafter, also referred to as "early post-injections") is performed at the period of time. Accordingly, the state where the temperature of the DPF **13** is equal to or more than a predetermined temperature continues for the period of time **Tro**.

That is, the early post-injection is executed so that combustion of the post-injection fuel commences at about a point of time when the heat generation rate in the main-combustion becomes substantially zero. Therefore, the post-injection fuel is combusted within the cylinder, but does not reach devices such as the oxidation catalyst **12** and the DPF **13** in a non-combusted fuel state to be deposited therein. Accordingly, even when the post-injection fuel is deposited in devices such as oxidation catalyst **12** and the DPF **13** through events of previous engine stoppage, the deposition amount is not increased, thereby enabling the prevention of a case where a large amount of the fuel thereafter is combusted abruptly, potentially leading to cracking of the DPF **13**.

Soot caused by diffusion combustion of the main-injection of the fuel is combusted again in the cylinder upon feeding of the early post-injection fuel, consequently reducing the soot discharge amount. In addition, since the early post-injection fuel is combusted in the cylinder, the HC discharge amount is reduced. Further, the combustion of the post-injection fuel causes the exhaust gas temperature to rise, thereby enabling temperature rises of the oxidation catalyst **12** and the DPF **13** to be implemented.

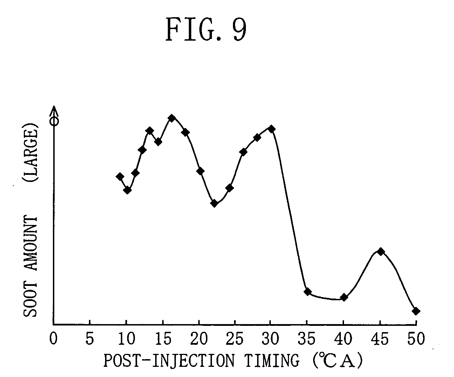

That is, in the intermediate-speed/intermediate-load operation mode of the engine (engine speed **Ne**: 2000 rpm, mean effective pressure **Pe**: 0.57 Mpa), experiments were conducted to measure soot discharge amounts by variously changing the post-injection timing for the fuel. The post-injection quantity was set to one sixth of the main-injection quantity. In the measurement, the EGR percentage was adjusted to cause a NOx discharge amount to be 120 ppm. The results are shown in Fig. **9**. The results verified that the soot discharge amount is significantly reduced when the post-injection timing is set to a range of from 35° CA to 40° CA ATDC in a compression stroke. In the figure, a void circle put on the portion where the post-injection timing is 0° CA represents a case where the post-injection quantity is zero.

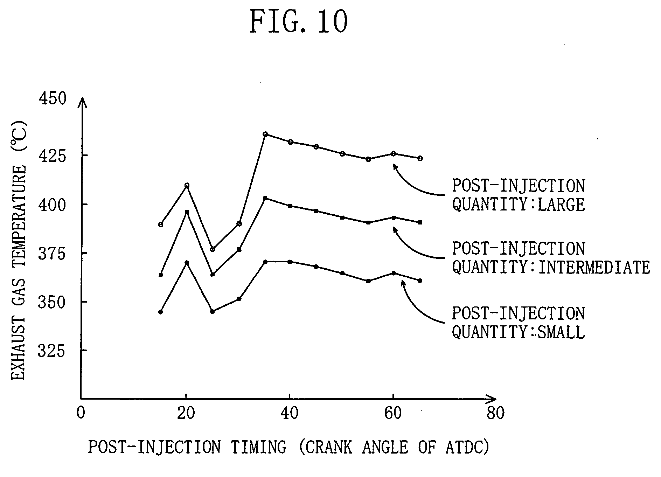

Further, in the intermediate-speed/intermediate-load operation mode, experiments were conducted to measure the exhaust gas temperature by variously changing the post-injection timing and the post-injection quantity. As a result, as shown in Fig. **10**, the exhaust gas temperature increases to be highest when the post-injection timing was set to about 35° CA ATDC at which the heat generation rate in the main-combustion becomes approximately zero. In addition, it was known that as the post-injection timing is retarded to be later than 35° CA ATDC, the exhaust gas temperature slowly decreases. Also known was that the exhaust gas temperature becomes higher as the post-injection quantity is larger.

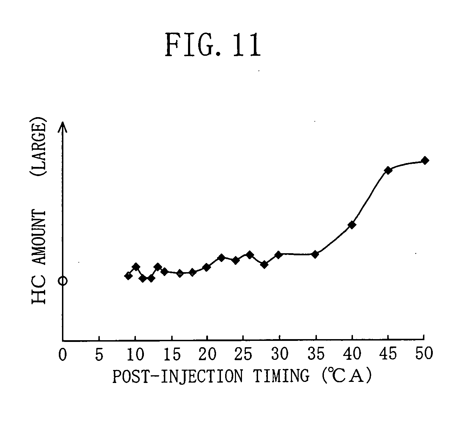

The relationships between the post-injection timings and the HC amounts were investigated. As shown in Fig. **11**, the results show no events where the HC amount rapidly increased to a point near 35° CA ATDC in the intermediate-speed/intermediate-load operation mode.

The above teaches that when the combustion of the post-injection fuel is controlled to commence at about a point of time when the heat generation rate in the main-combustion becomes substantially zero, the exhaust gas temperature can be increased while the soot discharge amount is reduced, and further increase in the HC discharge amount is minimized. Accordingly, post-injection fuel (fuel injected in the execution of the post-injection for the DPF regeneration before the previous engine stoppage), which is deposited in devices such as oxidation catalyst **12** and the DPF **13**, is combusted in the regulation period of time **Tro**.

Upon expiration of the regulation period of time **Tro**, the post-injection for the DPF regeneration is executed. In this stage, the amount of residual part of the post-injection fuel previously injected and fed for the DPF regeneration is small. In addition, the temperature of the DPF **13** is raised overall according to the exhaust gas temperature. Accordingly no state occur in which a large amount of post-injection fuel is deposited in the DPF **13** and/or therearound. Consequently, the DPF **13** can be prevented from being damaged.

### Control Example 4

A control example 4 is a modified example of the control example 3, which is implemented in a case where deceleration fuel cut is executed when the DPF **13** is regenerated during running the vehicle.

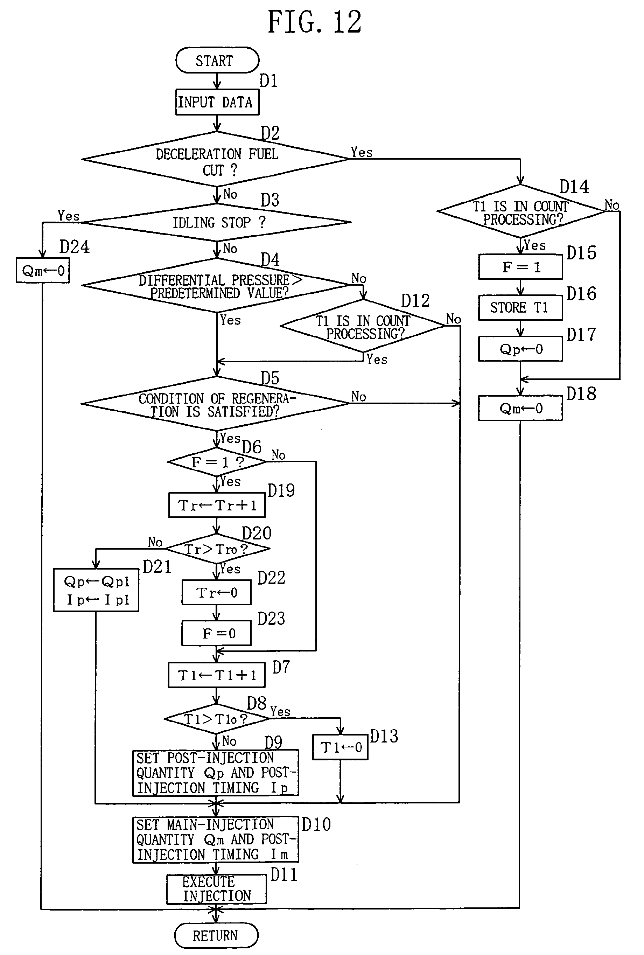

A procedure of fuel injection control by the ECU **20** will be described hereinafter with reference to a flowchart shown in Fig. **12**. Similar to the procedure of the fuel injection control example 1, data is inputted in step **D1** after the start; and in step **D2**, it is determined whether deceleration fuel cut is requested as an engine operation mode. When deceleration fuel cut is not requested in step **D2**, the process proceeds to step **D3** and it is determined whether idling stop is requested.

When deceleration fuel cut is requested in step **D2**, and when idling stop is not requested in step **D3**, the same processes (step **D4** to **D23**) as those in steps **C3** to **C22** in the control example 3 are carried out. In step **D3**, when idling stop is requested, the process proceeds to step **D24**, where the main-injection quantity **Qm** is set to zero.

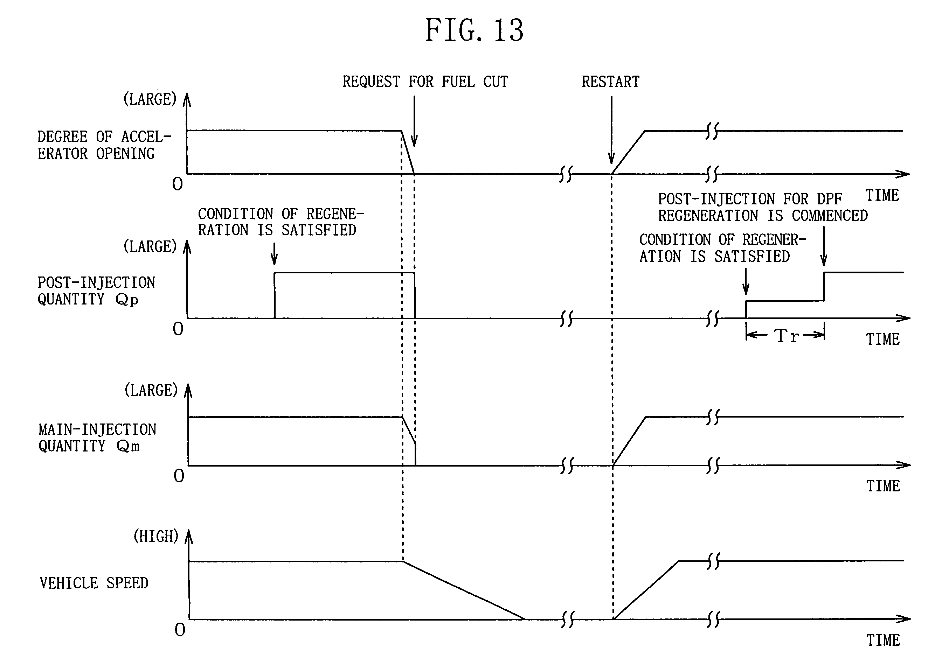

In specific, as shown in Fig. **13**, when the condition of regeneration is satisfied in a normal running mode in which the main-injection is executed, the post-injection is executed. When the depressed accelerator pedal is started to return, the main-injection quantity **Qm** decreases, and the vehicle speed begins to decrease. When the degree of the accelerator opening becomes zero (when deceleration fuel cut is requested), the main-injection and the post-injection are ceased. Similar to the example shown in Fig. **5**, a case where the state transitioned from the deceleration fuel cut mode to the idling stoppage mode is shown in Fig. **13**.

Thereafter, upon depression of the accelerator pedal, the starting motor is actuated to restart the engine. Then, the vehicle starts to run, and the main-injection commences. In the case where the problem of clogging the DPF **13** is not solved, the condition of regeneration of the DPF **13** is satisfied since the exhaust gas heats the DPF **13**. In the period of time **Tro**, however, the execution of the post-injection for the DPF regeneration is restricted in the period of time **Tro**, and an early post-injection is executed to raise the exhaust gas temperature during the period of time.

Accordingly, even when the post-injection fuel is deposited in devices such as oxidation catalyst **12** and the DPF **13** through events of previous fuel cut, the deposition amount is not increased, thereby enabling the prevention of a case where a large amount of the post-injection fuel thereafter is combusted abruptly, potentially leading to cracking of the DPF **13**.

Through the early post-injection, while the soot discharge amount is reduced and the HC discharge amount is not increased, the exhaust gas temperature can be raised. Accordingly, post-injection fuel (fuel post-injected for the DPF regeneration before the previous fuel cut) deposited in devices such as oxidation catalyst **12** and the DPF **13** is combusted in the regulation period of time **Tro**.

Upon expiration of the regulation period of time **Tro,** the post-injection for the DPF regeneration is executed. In this stage, the amount of residual part of post-injection fuel previously injected and fed for the DPF regeneration is small. In addition, since the temperature of the DPF **13** is raised overall according to the exhaust gas temperature, no event occurs in which a large amount of post-injection fuel is deposited in the DPF **13** and/or therearound. Consequently, the DPF **13** can be prevented from damage.

### Control Example 5

Similar to the control example 2, a control example 5 is implemented in the case when early fuel cut is requested during DPF regeneration during running the vehicle, the execution of the main-injection is continued for the predetermined time **T2o** after ceasing the post-injection. In this case, as in the control example 4, when the condition of regeneration of the DPF **13** is satisfied, the execution of the post-injection is restricted until the predetermined value **Tro** expires.

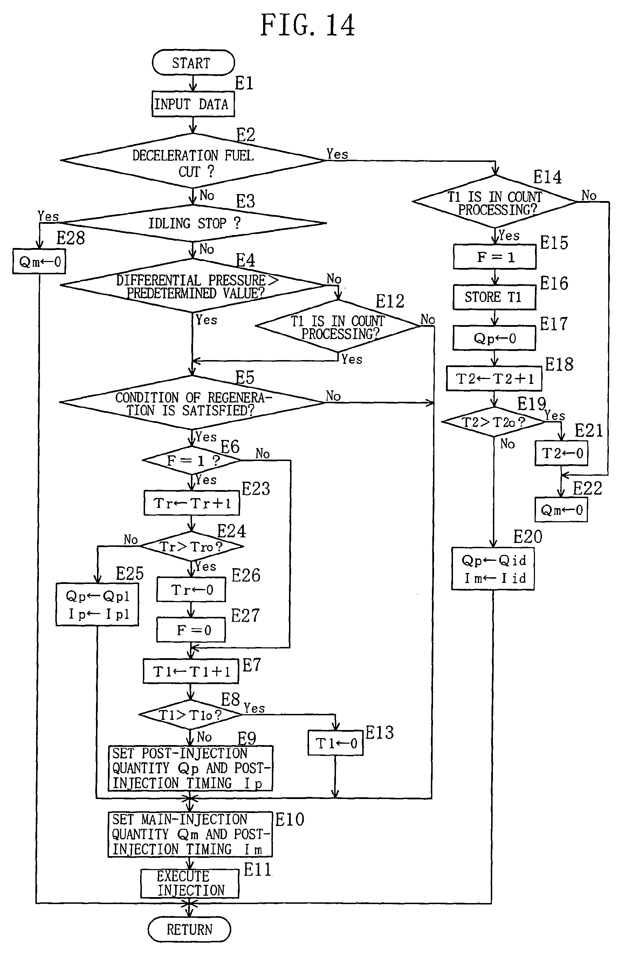

A procedure of operation of fuel injection control by the ECU **20** will be described hereinafter with reference to a flowchart shown in Fig. **14**. Similar to the procedure of the fuel injection control example 1, data is inputted in step **E1** after the start; and in subsequent step **E2**, it is determined whether deceleration fuel cut is requested as an engine operation mode.

In the event deceleration fuel cut is not requested in step **E2**, when the condition of regeneration of the DPF **13** is satisfied, the post-injection for the DPF regeneration is executed for the predetermined time **T1o** Upon request for deceleration fuel cut, when the timer **T1** is in count processing (in DPF regeneration), the post-injection is immediately ceased, and the execution of the main-injection is thereafter continued for the predetermined time **T2o**. These processes (in steps **E2** to **E22**) are substantially the same as those of the control example 2. However, the control example 5 is different from the control example 2 in that processing steps **E6** and **E15** regarding the flag **F** are provided, and step **E16** of storing the value of the first timer **T1** is provided.

In specific, when deceleration fuel cut is requested, if the timer **T1** is in count processing (in DPF regeneration) (step **E14**), the flag **F** is set to "1" in subsequent step **E15**, and the value of the first timer **T1** is stored in subsequent step **E16**. Thereafter, when the accelerator pedal is depressed, and the condition of regeneration of the DPF **13** is satisfied (step **E5**) again, in subsequent step **E6**, there is provided the determination regarding the flag value as "F = 1". Accordingly, the processes in steps **E23** to **E27** are executed, and the execution of the post-injection for the DPF regeneration is thereby restricted until the predetermined value (time) **Tro** expires. The processes for resetting the main-injection quantity to zero in the case of idling stop (steps **E3** ? **E28**) are the same as those of the control examples described above.

Thus, when deceleration fuel cut is requested in DPF regeneration, the post-injection is immediately ceased (interruption of the DPF regeneration), but the execution of the main-injection is continued thereafter for the predetermined time **T2o**. Thereby, the post-injection fuel is prevented from being deposited in the DPF **13**. In addition, when the control of the DPF **13** regeneration is resumed, the execution of the post-injection for the DPF regeneration is regulated until the expiration of the predetermined value (time) **Tro**. Accordingly, a case where a large amount of fuel is not deposited in the DPF **13** can be prevented. Consequently, a case where a large amount of the fuel is combusted abruptly and the DPF **13** is thereby damaged can securely be prevented.

In each of the control examples described above, while the post-injection for the DPF regeneration is executed, the control does not disturb the post-injection executed following the main-injection for purposes other than the purpose of regenerating the DPF **13**, such as the purpose of improving emission. As such, in some cases, the post-injection for soot reduction is executed at a point close to a crank angle ranging from 15 to 55° ATDC (after a top dead center in a compression stroke), and the post-injection for the DPF regeneration is thereafter executed.

### (Other Embodiments)

The embodiments described above use the oxidation catalyst **12** as combustion means for causing the post-injection fuel to be ignition-combusted before the fuel reaches the DPF **13**. As ignition means, however, a glow plug, spark plug, or ceramic heat accumulator may be provided to the exhaust passage **11** disposed upstream of the DPF **13**. In this case, when engine stoppage is requested during counting of the first timer **T1** in the control example 1 or when deceleration fuel cut is requested during counting of the first timer **T1** in the control example 2, the main-injection and the post-injection are terminated, and the ignition means is then operated for a short time. This arrangement enables residual part of the post-injection fuel in the exhaust passage to be combusted, thereby suppressing potential adverse effects when subsequent DPF regeneration is resumed.

According to each of the control examples 3 to 5, the restriction in the case of restarting the engine operation for the post-injection for the DPF regeneration is executed so that the post-injection is not executed, but the early post-injection is instead executed. However, the restriction may be arranged to reduce the quantity of the post-injection for the DPF regeneration during a predetermined time.

According to the embodiments, the soot deposition amount in the DPF **13** is detected in accordance with the differential pressure between the gas pressures in the front and rear potions of the DPF **13**. However, since the soot generation amount depends on the engine operation mode, the deposition amount of soot in the DPF **13** may be obtained in accordance with an engine operation history.

Further, the oxidation catalyst **12** may be disposed at a position of the exhaust passage **11** positioned upstream of the turbine **7**.

## Claims

1. An engine exhaust gas purification apparatus comprising:
a fuel injector (**5**) for feeding fuel to a combustion chamber (**4**) of a diesel engine (**1**);
a diesel particulate filter ("DPF") (**13**), disposed in an exhaust passage (**11**) of the diesel engine (**1**), for collecting soot in an exhaust gas;
collection amount detection means (**15, 16**) for detecting values regarding the amount of soot collected by the DPF (**13**); and
injection control means (**20**) for executing a post-injection so that the fuel injector (**5**) injects the fuel during the expansion stroke or the exhaust stroke after a main-injection so that the fuel injector (**5**) injects the fuel at or in the vicinity of a top dead center of the compression stroke in order to decrease soot collected in the DPF (**13**) when the amount of the collected soot is determined in accordance with detected values of the collection amount detection means (**15, 16**) to be larger than a predetermined value,
wherein when a request for stoppage of the diesel engine (**1**) or for fuel cut therefor is detected during the execution of the post-injection for decreasing soot, the injection control means (**20**) immediately terminates the post-injection and terminates the main-injection after a first predetermined time (**T2o**) has elapsed from a point of time when the request is detected.

2. The engine exhaust gas purification apparatus according to Claim 1, further comprising:
ignition means, disposed in the exhaust passage (**11**) positioned upstream of the DPF (**13**), for igniting the fuel in the exhaust passage (**11**); and
ignition control means (**20**) for controlling the ignition means to operate when the request for stoppage of the diesel engine (**1**) or for fuel cut therefor is detected.

3. The engine exhaust gas purification apparatus according to Claim 1 or 2,
wherein an oxidation catalyst (**12**) is disposed in the exhaust passage (**11**) positioned upstream of the DPF (**13**).

4. The engine exhaust gas purification apparatus according to any of Claims 1 to 3,
wherein when the request for stoppage of the diesel engine (**1**) or for fuel cut therefor is detected during the execution of the post-injection for decreasing soot, and the post-injection and the main-injection are terminated in response to the request, the injection control means (**20**) place restriction on the post-injection for decreasing soot at the time of resuming the fuel injection.

5. The engine exhaust gas purification apparatus according to Claim 4,
wherein the restriction of the post-injection is performed so that a quantity of the post-injection of the fuel from a point of time when the fuel injection is resumed until a second predetermined time (**Tro**) elapses is smaller than a quantity of the post-injection for decreasing soot after the second predetermined time (**Tro**) has elapsed.

6. The engine exhaust gas purification apparatus according to Claim 4 or 5,
wherein the restriction of the post-injection is performed so that the execution of the post-injection for decreasing soot is ceased while a state where the temperature of the DPF (**13**) is equal to or more than a predetermined temperature continues for the second predetermined time (**Tro**).

7. The engine exhaust gas purification apparatus according to Claim 5 or 6,
wherein the second predetermined time (**Tro**) is set to a value increasing greater as a stoppage continuance time of the diesel engine (**1**) increases longer.

8. The engine exhaust gas purification apparatus according to one of the preceding Claims, further comprising
DPF temperature detection means for detecting the temperature of the DPF (**13**),
wherein the injection control means (**20**) performs: control of the post-injection to be executed when soot collected in the DPF (**13**) is requested to decrease, and the temperature of the DPF (**13**) that has been detected by the DPF temperature detection means exceeds a predetermined value; and restriction of the post-injection when the temperature of the DPF (**13**) is equal to or less than the predetermined value.

9. The engine exhaust gas purification apparatus according to one of the preceding Claims,
wherein the diesel engine (**1**) is mounted on a vehicle to drive the vehicle,
wherein the engine exhaust gas purification apparatus further comprises stop state detection means (**21, 22**) for detecting a stop state of the vehicle, and
wherein the injection control means (**20**) controls the main-injection to terminate when the stop state detection means (**21, 22**) has detected that the vehicle is in the stop state.

10. An engine exhaust gas purification method for an engine, comprising the following steps:
detecting values regarding the amount of soot collected by a diesel particulate filter ("DPF") (**13**), disposed in an exhaust passage (**11**) of the diesel engine (**1**), for collecting soot in an exhaust gas; and
executing a post-injection so that a fuel injector (**5**) for feeding fuel to a combustion chamber (**4**) of a diesel engine (**1**) injects the fuel during the expansion stroke or the exhaust stroke after a main-injection so that the fuel injector (**5**) injects the fuel at or in the vicinity of a top dead center of the compression stroke in order to decrease soot collected in the DPF (**13**) when the amount of the collected soot is determined in accordance with detected values of the collection amount detection means (**15, 16**) to be larger than a predetermined value,
wherein when a request for stoppage of the diesel engine (**1**) or for fuel cut therefor is detected during the execution of the post-injection for decreasing soot, the injection control means (**20**) immediately terminates the post-injection and terminates the main-injection after a first predetermined time (**T2o**) has elapsed from a point of time when the request is detected.

11. The engine exhaust gas purification method according to Claims 10,
wherein when the request for stoppage of the diesel engine (**1**) or for fuel cut therefor is detected during the execution of the post-injection for decreasing soot, and the post-injection and the main-injection are terminated in response to the request, a restriction is placed on the post-injection for decreasing soot at the time of resuming the fuel injection.

12. The engine exhaust gas purification method according to Claim 11,
wherein the restriction of the post-injection is performed so that a quantity of the post-injection of the fuel from a point of time when the fuel injection is resumed until a second predetermined time (**Tro**) elapses is smaller than a quantity of the post-injection for decreasing soot after the second predetermined time (**Tro**) has elapsed.

13. The engine exhaust gas purification method according to Claim 11 or 12,
wherein the restriction of the post-injection is performed so that the execution of the post-injection for decreasing soot is ceased while a state where the temperature of the DPF (**13**) is equal to or more than a predetermined temperature continues for the second predetermined time (**Tro**).

14. The engine exhaust gas purification method according to Claim 12 or 13,
wherein the second predetermined time (**Tro**) is set to a value increasing greater as a stoppage continuance time of the diesel engine (**1**) increases longer.

15. The engine exhaust gas purification method according to one of the preceding Claims 10 to 14, further comprising a step of detecting the temperature of the DPF (**13**),
wherein the post-injection is controlled to be executed when soot collected in the DPF (**13**) is requested to decrease, and the temperature of the DPF (**13**) that has been detected exceeds a predetermined value; and restriction of the post-injection is performed when the temperature of the DPF (**13**) is equal to or less than the predetermined value.

16. The engine exhaust gas purification method according to one of the preceding Claims 10 to 15, wherein the main-injection is controlled to terminate when it has been detected that the vehicle is in a stop state.

17. A computer program product for an engine exhaust gas purification for an engine comprising computer-readable instructions which, when loaded and run on a suitable computer performs an engine exhaust gas purification method according to one of the preceding claims 10 to 16.
